# EUROPÄISCHE PATENTSCHRIFT

(11) **EP 2 318 151 B1**
(45) Veröffentlichungstag und Bekanntmachung des Hinweises auf die Patenterteilung: **22.11.2017**
(21) Anmeldenummer: 09776849.3
(22) Anmeldetag: 26.06.2009
(51) Int. Cl.: B05D 5/06, B05D 7/02

(54) **CHROMGLÄNZENDES TEIL**
POLISHED CHROME-TYPE ELEMENT
PIÈCE CHROMÉE

(30) Priorität: 27.08.2008 DE 102008039822
(43) Veröffentlichungstag der Anmeldung: 11.05.2011
(73) Patentinhaber: Linden GmbH, 58515 Lüdenscheid (DE)
(72) Erfinder: KASTRUP, Michael, 79189 Bad Krozingen (DE)
(74) Vertreter: Cohausz Hannig Borkowski Wißgott
(86) Internationale Anmeldenummer: PCT/EP2009/004627
(87) Internationale Veröffentlichungsnummer: WO 2010/022812

(56) Entgegenhaltungen:
- DE-A1- 3 230 491
- DE-A1-102004 060 481
- DE-A1-102006 048 631
- DE-A1-102007 037 079
- US-A- 5 251 064

## Beschreibung

Die Erfindung betrifft ein chromglänzendes Teil insbesondere Reflektor, Chromleiste, Griffleiste, Kfz.-Kühlergrill oder Verschluss.

Es ist bekannt, chromglänzende Teile herzustellen, indem Teile aus Metall oder Kunststoff oberseitig bzw. außenseitig mit einer Chromschicht versehen werden. Das Herstellen solcher Teile ist aufwendig und es besteht die Gefahr, dass sich die Chromschicht insbesondere bei einer Kunststoffunterlage löst.

Aus der DE 10 2004 060 481 A1 ist ein Bauteil aus einem Mehrschichtwerkstoff insbesondere für Kraftfahrzeugscheinwerfer als farbige Oberfläche bekannt, wobei eine Reflexionsschicht aus Aluminium von einer transparenten Farbstoffschicht und einer transparenten Schutzschicht bedeckt ist. Es hat sich gezeigt, dass ein höherer Reflexionsgrad wünschenswert ist.

Aufgabe der Erfindung ist es, ein chromglänzendes Teil zu schaffen, das bei einfacher Herstellung eine hohe Beständigkeit und ein hohes Reflektionsvermögen besitzt.

Diese Aufgabe wird erfindungsgemäß dadurch gelöst, dass es eine tragende transparente Kunststoffschicht aufweist, auf deren von einem Betrachter und/oder einer Lichtquelle abgewandten Rückseite eine Polymerchromschicht insbesondere als Lack aufgebracht ist.

Bei einem solchen Teil bildet die transparente Kunststoffschicht die Außenseite, so dass die rückseitige Polymerchromschicht sicher geschützt ist. Hierdurch wird eine hohe Beständigkeit erreicht. Auch ist die Herstellung einfach und weniger umweltgefährdend und ein hoher Reflektionsgrad ist erreichbar.

Ein zusätzlicher Schutz der Polymerchromschicht wird erreicht, wenn die Polymerchromschicht rückseitig durch eine schützende Deckschicht aus Kunststoff und/oder durch einen Lack bedeckt ist.

Insbesondere zum Bilden von Reflektoren wird vorgeschlagen, dass die Rückseite der tragenden transparenten Kunststoffschicht konkav oder konvex gebogen ist, insbesondere um Licht zu bündeln, zu richten oder zu streuen.

Hierbei kann das Teil den Reflektor eines Scheinwerfers oder einer Rückleuchte insbesondere eines Kraftfahrzeugs bilden.

Besonders vorteilhaft ist es, wenn die tragende transparente Kunststoffschicht aus Polymethylmethacrylat oder Polycarbonat besteht. Auch wird vorgeschlagen, dass die Polymerchromschicht aus einem Lacksystem mit Metallicpigmenten besteht.

Ausführungsbeispiele der Erfindung werden im Folgenden näher beschrieben.

Es zeigen in Querschnitten
- Fig. 1: ein chromglänzendes Teil mit Lichtbündelung,
- Fig. 2: ein chromglänzendes Teil mit Lichtstreuung,
- Fig. 3: den Ausschnitt A aus Fig. 4,
- Fig. 4: ein chromglänzendes Teil als Reflektor einer Leuchte insbesondere eines Scheinwerfers mit Prallwand.

Eine tragende transparente Kunststoffschicht 1 insbesondere Polymethylmethacrylat oder Polycarbonat weist eine glatte Vorderseite und eine zur Vorderseite parallele glatte Rückseite auf. Auf der Rückseite ist eine dünne Polymerchromschicht 2 insbesondere als Lack aufgebracht insbesondere aufgesprüht, die Strahlen insbesondere Licht reflektiert, das von vorne durch die transparente Kunststoffschicht hindurchdringt und wieder nach vorne abgestrahlt wird. Um die Polymerchromschicht 2 rückseitig zu schützen, ist sie rückseitig durch eine schützende Deckschicht 3 aus Kunststoff insbesondere durch einen Lack bestimmter Färbung bedeckt. Die transparente Kunststoffschicht 1 hat damit eine tragende Funktion für die Polymerchromschicht 2 und kann konkav oder konvex gebogen sein, so dass die von vorne auf das chromglänzende Teil fallende Strahlung gebündelt, gerichtet oder gestreut reflektiert wird.

Das chromglänzende Teil ist für die unterschiedlichsten Zwecke verwendbar insbesondere als Reflektor eines Scheinwerfers oder einer Rückleuchte eines Kraftfahrzeugs, als Chromleiste, als Griffleiste, als Teil eines Kfz.-Kühlergrills oder als Verschlusskappe.

Die Polymerchromschicht 2 besteht vorzugsweise aus einem Lacksystem mit Metallicpigmenten.

In der Zeichnung sind unterschiedliche Anwendungen des erfindungsgemäßen chromglänzenden Teils dargestellt. Das chromglänzende Teil mit tragender transparenter Kunststoffschicht 1 aus Polymethylmethacrylat oder aus Polycarbonat ist auf der der Strahlung abgewandten Seite (= Rückseite) mit einer Polymerchromschicht 2 bedeckt. Hierdurch wird die durch die Schicht 1 hindurchdringende Strahlung von der Schicht 2 reflektiert, um dann wieder durch die Schicht 1 hindurchzutreten und nach außen zu dringen.

Die Rückseite der Polymerchromschicht 2 ist durch einen Schutzlack als Deckschicht 3 bedeckt.

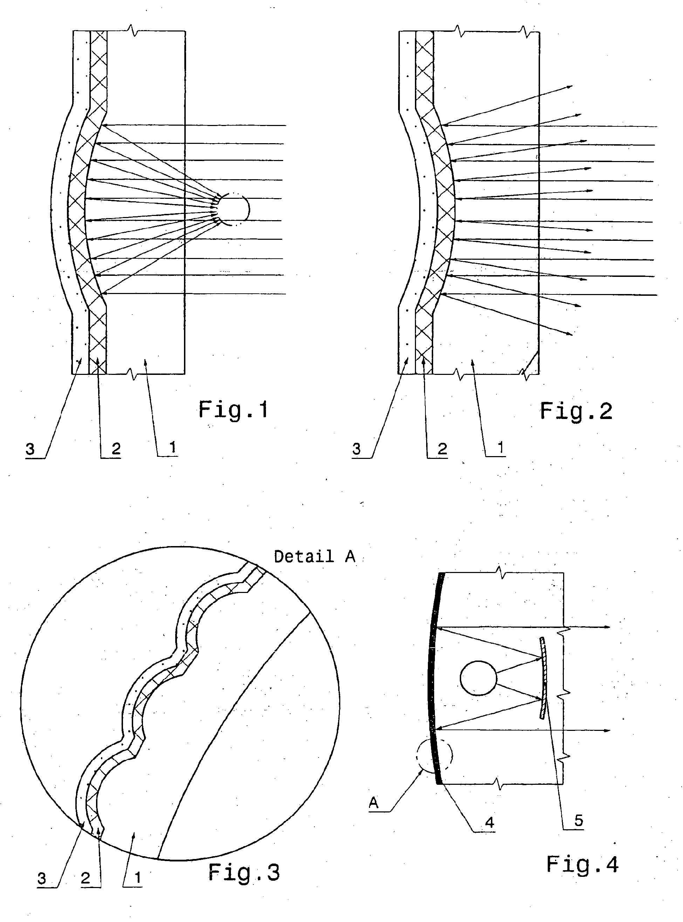

Im Ausführungsbeispiel nach Fig. 1 erfolgt eine Bündelung des Lichts, in der Ausführung nach Fig. 2 eine Lichtstreuung und in Fig. 4 wird bei einem Scheinwerfer das Licht durch die Wand des Reflektors 4 gerichtet. Hierbei kann der Scheinwerfer eine vorderseitige Prallwand 5 aufweisen und die Reflektorwand besitzt beispielsweise kleine konkave Ausnehmungen zur Lichtbündelung und/oder Lichtrichtung.

## Patentansprüche

1. Chromglänzendes Teil insbesondere Reflektor, Chromleiste, Griffleiste, Kfz.-Kühlergrill oder Verschluss,
**dadurch gekennzeichnet, dass**
es eine tragende transparente Kunststoffschicht aufweist, auf deren von einem Betrachter und/oder eine Lichtquelle abgewandten Rückseite eine Polymerchromschicht insbesondere als Lack aufgebracht ist.

2. Chromglänzendes Teil nach Anspruch 1, **dadurch gekennzeichnet, dass** die Polymerchromschicht rückseitig durch eine schützende Deckschicht aus Kunststoff und/oder durch einen Lack bedeckt ist.

3. Chromglänzendes Teil nach Anspruch 1 oder 2, **dadurch gekennzeichnet, dass** die Rückseite der tragenden transparenten Kunststoffschicht konkav oder konvex gebogen ist, insbesondere um Licht zu bündeln, zu richten oder zu streuen.

4. Chromglänzendes Teil nach Anspruch 3, **dadurch gekennzeichnet, dass** es den Reflektor eines Scheinwerfers oder einer Rückleuchte insbesondere eines Kraftfahrzeugs bildet.

5. Chromglänzendes Teil nach einem der vorherigen Ansprüche **dadurch gekennzeichnet, dass** die tragende transparente Kunststoffschicht aus Polymethylmethacrylat oder Polycarbonat besteht.

6. Chromglänzendes Teil nach einem der vorherigen Ansprüche **dadurch gekennzeichnet, dass** die Polymerchromschicht aus einem Lacksystem mit Metallicpigmenten besteht.

## Claims

1. Polished chrome-type element, in particular a reflector, chrome strip, handle strip, radiator grill of a motor vehicle or closure,
**characterized in that**
it has a supporting transparent plastic layer onto the rear side of which, facing away from an observer and/or a light source, a polymer chrome coat is applied, in particular in the form of a lacquer.

2. Polished chrome-type element according to Claim 1, **characterized in that** the polymer chrome coat is covered on the rear side by a protective outer layer of plastic and/or by a lacquer.

3. Polished chrome-type element according to Claim 1 or 2, **characterized in that** the rear side of the supporting transparent plastic layer is concavely or convexly bent, in particular in order to concentrate, direct or diffuse light.

4. Polished chrome-type element according to Claim 3, **characterized in that** it forms the reflector of a headlamp or of a rear light, in particular of a motor vehicle.

5. Polished chrome-type element according to one of the preceding claims, **characterized in that** the supporting transparent plastic layer consists of polymethylmethacrylate or polycarbonate.

6. Polished chrome-type element according to one of the preceding claims, **characterized in that** the polymer chrome coat consists of a lacquer system with metallic pigments.

## Revendications

1. Pièce chromée brillante, en particulier réflecteur, baguette chromée, poignée, calandre de véhicule automobile ou fermeture,
**caractérisée en ce**
**qu'**elle présente une couche en matière plastique transparente porteuse sur le côté arrière de laquelle, éloigné d'un observateur et/ou d'une source de lumière, une couche chromée polymère est appliquée, en particulier sous forme de vernis.

2. Pièce chromée brillante selon la revendication 1, **caractérisée en ce que** la couche chromée polymère est, côté arrière, couverte d'une couche de couverture protectrice en matière plastique et/ou d'un vernis.

3. Pièce chromée brillante selon la revendication 1 ou 2, **caractérisée en ce que** le côté arrière de la couche en matière plastique transparente porteuse est courbé de façon concave ou convexe, en particulier pour concentrer, diriger ou disperser la lumière.

4. Pièce chromée brillante selon la revendication 3, **caractérisée en ce qu'**elle forme le réflecteur d'un phare ou d'un feu arrière, en particulier d'un véhicule automobile.

5. Pièce chromée brillante selon l'une des revendications précédentes, **caractérisée en ce que** la couche en matière plastique transparente porteuse se compose de polyméthacrylate de méthyle ou de polycarbonate.

6. Pièce chromée brillante selon l'une des revendications précédentes, **caractérisée en ce que** la couche chromée polymère se compose d'un système de vernis avec des pigments métalliques.
